# EUROPEAN PATENT SPECIFICATION

(11) **EP 3 759 618 B1**
(45) Date of publication and mention of the grant of the patent: **25.02.2026**
(21) Application number: 19834901.1
(22) Date of filing: 09.07.2019
(51) Int. Cl.: G06F 3/16, G06F 16/9032

(54) **METHOD AND DEVICE FOR RETRIEVING CONTENT**
VERFAHREN UND VORRICHTUNG ZUM ABRUFEN VON INHALT
PROCÉDÉ ET DISPOSITIF DE RÉCUPÉRATION DE CONTENU

(30) Priority: 09.07.2018 IN 201841025586
(43) Date of publication of application: 06.01.2021
(73) Proprietor: Samsung Electronics Co., Ltd., Gyeonggi-do 16677 (KR)
(72) Inventor: RANJITSINH, Vala Vanrajsinh, Bangalore 560037 (IN); KANDUR RAJA, Barath Raj, Bangalore 560037 (IN); PURRE, Naresh, Bangalore 560037 (IN); VEERANNAGARI, Balabhaskar, Bangalore 560037 (IN); PUNURU, Srilakshmi, Bangalore 560037 (IN); CHITTUR RAVICHANDER, Karthik, Bangalore 560037 (IN); BHAMIDIPATI, Sreevatsa Dwaraka, Bangalore 560037 (IN)
(74) Representative: Gulde & Partner
(86) International application number: PCT/KR2019/008433
(87) International publication number: WO 2020/013579

(56) References cited:
- KR-A- 20170 059 303
- US-A1- 2008 194 231
- US-A1- 2011 081 923
- US-A1- 2014 188 989
- US-A1- 2015 382 047
- US-A1- 2016 029 182
- US-A1- 2017 358 305

## Description

### [Technical Field]

The disclosure relates to a query processing system, and more particularly to a method and electronic device for retrieving content by processing a user request using an electronic device that receives the user request and using other electronic devices in proximity to the electronic device for searching for content based on the user's intent and context.

### [Background Art]

Conventional systems that simulate artificial intelligence are usually adapted to receive an input from a user, in either speech or typed form, and generate a response when a certain word or phrase is detected as the input. Further, artificial intelligence systems have been utilized in various different applications to interact with individuals. These applications have included customer service applications, voice response systems, games, and pure novelty pseudo-interactive programs. In effort to reduce costs associated with customer service, many companies have implemented automated systems that interact with the user and provide responses within the devices.

In an example, a user of a first electronic device inputs the query "I want to see the picture taken at John's home last week." Based on the user query, the first electronic device identifies context-based indication corresponding to the "picture taken at John's home," and searches within the first electronic device for a result of the query. Based on the identification related to the context-based indication, the first electronic device itself processes the query. Further, the first electronic device retrieves the picture taken at John's home within the electronic device, and displays the picture. However, the first electronic device does not have the capability to process the same query in other electronic device(s) for retrieving content relevant to the query.

A prior art of US 2017/358305 A1 defines a process for operating a digital assistant. In one example, the process includes receiving a first speech input from a user and identifying context information and determining a user intent based on the first speech input and the context information. The method further includes determining whether the user intent is to perform a task using a searching process or an object managing process.

Further, US 2015/382047 A1 discloses an intelligent automated assistant for tv user interactions.

Thus, it is desired to address the above mentioned disadvantages or other shortcomings or at least provide a useful alternative.

### [Disclosure of Invention]

### [Technical Problem]

Embodiments of the disclosure provide a method and electronic device for retrieving content by processing a user request.

Embodiments of the disclosure analyze the user request to determine a user intent and a context related to the user request.

Embodiments of the disclosure identify one or more another electronic devices for searching the content based on the determined user intent and the context.

Embodiments of the disclosure identify the content in the one or more another electronic devices using one or more menu trees associated with one or more another electronic devices.

Embodiments of the disclosure dynamically retrieve the content relevant to the user request from one or more other electronic devices.

### [Solution to Problem]

According to an embodiment of the disclosure, there is provided a method for retrieving content by a first device as defined in the appended claims. Further, a corresponding method for retrieving content by a server, a server and a first device are also provided as defined in the appended claims.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation.

### [Brief Description of Drawings]

This disclosure is illustrated in the accompanying drawings, throughout which like reference letters indicate corresponding parts in the various figures. The embodiments herein will be better understood from the following description with reference to the drawings, in which:
FIG. 1 illustrates an example system in which a first electronic device retrieves content from a second electronic device by processing a user request on the second electronic device, according to an embodiment of the disclosure;
FIG. 2 illustrates an example system in which the first electronic device retrieves content from one or more second electronic devices by processing the user request on the second electronic device, according to an embodiment of the disclosure;
FIG. 3 illustrates an example system in which the first electronic device retrieves the content from the second electronic device through a server, according to an embodiment of the disclosure;
FIG. 4 illustrates an example system in which the first electronic device retrieves the content from the one or more second electronic devices, through the server, by processing the user request on the server, according to an embodiment of the disclosure;
FIG. 5 is a block diagram of the first electronic device /the second electronic device, according to an embodiment of the disclosure;
FIG. 6 is a block diagram of the server, according to an embodiment of the disclosure;
FIG. 7 is a block diagram of the menu tree processor, according to an embodiment of the disclosure;
FIG. 8A is a flowchart illustrating a method for executing the user request on the second electronic devices for receiving the action, according to an embodiment of the disclosure;
FIG. 8B is a flowchart illustrating a method for retrieving content by processing the user request on the second electronic device, according to an embodiment of the disclosure;
FIG. 8C is a flowchart illustrating a method for retrieving content from the second electronic devices, through the server, by processing the user request on the second electronic device, according to an embodiment of the disclosure;
FIG. 9 is a flowchart illustrating a method for retrieving content from the set of second electronic devices, through the server, by processing the user request on the server, according to an embodiment of the disclosure;
FIG. 10 illustrates a system for retrieving content from the second electronic device by processing the user request on the second electronic device through the server, according to an embodiment of the disclosure;
FIG. 11 is a sequence diagram illustrating various operations for establishing a connection between the first electronic device and the second electronic device through the server, according to an embodiment of the disclosure;
FIG. 12 is an example scenario in which various operations of the menu tree processor are explained, according to an embodiment of the disclosure;
FIG. 13 is flowchart illustrating various operations for retrieving content from the second electronic device through the server, according to an embodiment of the disclosure;
FIGS. 14A, 14B, and 14C are example scenarios in which various operations are performed for retrieving content from the second electronic devices through the server during single hop scenario, according to an embodiment of the disclosure;
FIG. 15 is an example scenario in which various operations is performed for retrieving content from the set of second electronic devices, through the server during a multi hop scenario, according to an embodiment of the disclosure;
FIG. 16 is a sequence diagram illustrating various operations for retrieving content from the second electronic devices by processing the user request on the first electronic device through the server, according to an embodiment of the disclosure; and
FIGS. 17A, 17B, and 17C are example scenarios in which various operations are performed for retrieving content from the set of second electronic devices by processing the user request on the second electronic device through the server, according to an embodiment of the disclosure.
FIGS. 18A, 18B, and 18C are example scenarios in which various operations are performed for retrieving content from the set of second electronic devices by processing the user request on the second electronic device through the server, according to an embodiment of the disclosure.
FIG. 19 is example scenarios in which various operations are performed for retrieving content from the set of second electronic devices by processing the user request on the second electronic device through the server, according to an embodiment of the disclosure.

### [Mode for the Invention]

The embodiments herein and the various features and advantageous details thereof are explained more fully with reference to the non-limiting embodiments that are illustrated in the accompanying drawings and detailed in the following description. Descriptions of well-known components and processing techniques are omitted to avoid unnecessarily obscuring the embodiments herein. Also, the various embodiments described herein are not necessarily mutually exclusive, as some embodiments can be combined with one or more other embodiments to form additional embodiments. The term "or" as used herein, refers to a non-exclusive or, unless otherwise indicated. The examples used herein are intended merely to facilitate an understanding of ways in which the embodiments herein can be practiced and to further enable those skilled in the art to practice the embodiments herein. Accordingly, the examples should not be construed as limiting the scope of the embodiments herein.

As is traditional in the field, embodiments may be described and illustrated in terms of blocks which carry out a described function or functions. These blocks, which may be referred to herein as units or modules or the like, are physically implemented by analog or digital circuits such as logic gates, integrated circuits, microprocessors, microcontrollers, memory circuits, passive electronic components, active electronic components, optical components, hardwired circuits, or the like, and may optionally be driven by firmware and software executed by hardware, such as a microprocessor or microcontroller. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

The accompanying drawings are used to help easily understand various technical features and it should be understood that the embodiments presented herein are not limited by the accompanying drawings.

The terms, such as "first," "second," and the like used herein may refer to distinguish various elements of various embodiments of the disclosure, but do not limit the elements. For example, "a first user device" and "a second user device" may indicate different user devices regardless of the order or priority thereof. For example, "a first user device" and "a second user device" indicate different user devices. For example, without departing the scope of the disclosure, a first element may be referred to as a second element, and similarly, a second element may be referred to as a first element.

According to the situation, the expression "configured to" used herein may be used as, for example, the expression "suitable for," "having the capacity to," "designed to," "adapted to," "made to," or "capable of." The term "configured to" must not mean only "specifically designed to" in hardware. Instead, the expression "a device configured to" may mean that the device is "capable of" operating together with another device or other components. For example, a "processor configured to (or set to) perform A, B, and C" may mean a dedicated processor (e.g., an embedded processor) for performing a corresponding operation or a generic-purpose processor (e.g., a central processing unit (CPU) or an application processor (AP)) which performs corresponding operations by executing one or more software programs which are stored in a memory device.

Embodiments herein provide a method for retrieving content by an electric device of a user processing a user request. The method includes receiving, by a content search engine, the user request. Further, the method includes analyzing, by the content search engine, the user request to determine a user intent and a context related to the user request. A user intents further, the method includes identifying, by the content search engine, one or more electronic devices in proximity to the electronic device for searching the content based on the user intent and the context. Further, the method includes dynamically retrieving, by the content search engine, the content relevant to the user request from the one or more electronic devices.

Consider an example, the user of the first electronic device inputs the query "find restaurants near me." Based on the user query, the first electronic device identifies a context-based indication corresponding to the "find the restaurants near me" and searches for a result to the query within the first electronic device. Further, the first electronic device identifies other electronic devices having the restaurant information. Based on the identification related to the context-based indication, the first electronic device processes the query in the other electronic devices. Further, the first electronic device retrieves the restaurant information from the other electronic devices, and displays a cumulative results of the restaurant information.

Embodiments herein relate to a method for retrieving content by processing a user request by a server. The method includes receiving, by a menu tree processor, the user request from a first electronic device. Further, the method includes identifying, by the menu tree processor, one or more second electronic devices for processing the user request. Further, the method includes identifying, by the menu tree processor, the content relevant to the user request in the one or more second electronic devices using one or more menu trees associated with the one or more second electronic devices. Further, the method includes dynamically retrieving, by the menu tree processor, the content from the one or more second electronic devices.

Consider an example, the user of the first electronic device feeds the query as "find banks near me." Based on the user query, the first electronic device identifies that context-based indication corresponding to the "find banks near me" and searches for a result to the query within the first electronic device. Further, the first electronic device identifies other electronic devices that have bank information using one or more menu trees associated with the one or more second electronic devices. Based on the identification related to the context-based indication, the server processes the query in the one or more second electronic device. Further, the first electronic device retrieves the bank information from the one or more second electronic device through the server, and displays a cumulative result of the bank information.

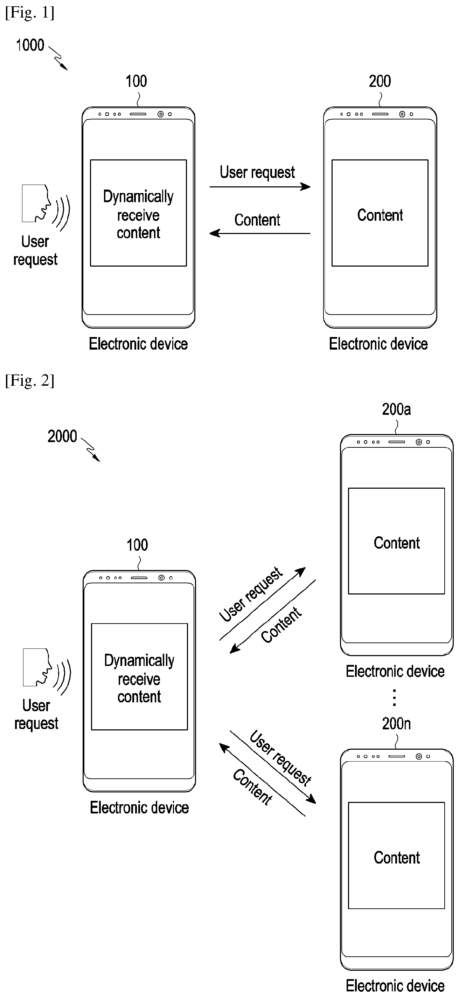

Referring now to the drawings and more particularly to FIGS. 1 through 19, where similar reference characters denote corresponding features consistently throughout the figure, there are shown preferred embodiments.

FIG. 1 illustrates an example system 1000 in which a first electronic device 100 retrieves content from a second electronic device 200 by processing a user request on the second electronic device 200, according to an embodiment of the disclosure. In an embodiment, the system 1000 includes the first electronic device 100 and the second electronic device 200. The first electronic device 100 and the second electronic device 200 can be, for example, but not limited to a smartphone, a tablet personal computer (PCs, a mobile phone, an electronic book reader, a desktop PC, a laptop PC, a netbook computer, a personal digital assistant (PDA), a portable multimedia player (PMP), a mobile medical device, a smart watch, a robotic assistance device or the like. The first electronic device 100 is in proximity to the second electronic device 200, such that the first electronic device 100 may communicate with the second electronic device 200 directly or via short range communication.

In an embodiment, the first electronic device 100 communicates with the one or more second electronic devices 200 through a short range communication. The short-range communications can be, for example, but not limited to, a BLUETOOTH 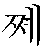 , radio frequency identification (RFID), infrared data association (IrDA), ultra-wideband (UWB), Zigbee, near field communication (NFC), wireless-fidelity (Wi-Fi), Wi-Fi direct, wireless universal serial bus (USB) or the like.

In an embodiment, the first electronic device 100 is configured to receive a user request. The user request can be, for example but not limited to, a text input, a voice input, a gesture input and a camera input. The user request is obtained through an input unit. In an example, the input unit can be a camera for obtaining images or video, a microphone, which is one type of audio input device for inputting an audio signal, and a user input unit (for example, a touch key, a push key, a mechanical key, a soft key, and the like) for allowing a user to input information.

After receiving the user request, the first electronic device 100 is configured to analyze the user request to determine a user intent and a context related to the user request. Further, the first electronic device 100 is configured to execute the user request on the second electronic device 200 for performing an action (e.g., retrieving the content or the like). The content can be for example, but not limited to, an audio, a video, an image, multimedia content or the like.

In another embodiment, the first electronic device 100 is configured to receive the user request. After receiving the user request, the first electronic device 100 is configured to analyze the user request to determine the user intent and the context related to the user request.

Based on the user intent and the context, the first electronic device 100 is configured to identify the second electronic device 200 in proximity to the first electronic device 100 to search for the content related to the request.

In an embodiment, the second electronic device 200 is identified to search for the content based on the user intent and the context by determining that the content relevant to the user request is unavailable or partially available at the first electronic device 100, and identifying the second electronic device 200 to search for the content in response to determining that the content relevant to the user request is unavailable or partially available at the first electronic device 100. For example, the availability refers to stored information pertaining to the content relevant to the user request at the first electronic device 100.

Further, the first electronic device 100 is configured to dynamically retrieve the content relevant to the user request from the second electronic device 200. The content is dynamically retrieved from the second electronic device 200 by obtaining a menu tree associated with the first electronic device 100, mapping the menu tree associated with the first electronic device 100 with one or more menu trees associated with the second electronic device 200, identifying the content in the second electronic device 200 using the one or more menu trees associated with the second electronic device 200, and selecting the content in the second electronic device 200 based on a pre-determined criterion. Wherein the menu tree refers to bank information associated with the first electronic device 100 and the second electronic device 200.

In an embodiment, the selection criterion includes at least one of a type of the content, a format of the content, a network associated with the second electronic device 200, and configuration of the second electronic device 200. In other words, devices are ranked based on criteria pertaining to at least one of a type of the content, a format of the content, a network associated with the second electronic device 200, and configuration of the second electronic device 200.

FIG. 2 illustrates an example system 2000 in which the first electronic device 100 retrieving content from one or more second electronic devices 200a-200n by processing the user request on the second electronic device 200a-200n, according to an embodiment. The operations and the functions of the first electronic device 100 and the one or more second electronic devices 200a-200n are explained in conjunction with the FIG. 1. Further, the first electronic device 100 is in proximity to the second electronic devices 200a-200n.

As shown in the FIG. 2, the first electronic device 100 is configured to dynamically retrieve the content relevant to the user request from the one or more second electronic devices 200a-200n. The content is dynamically retrieved from the one or more second electronic devices 200a-200n by obtaining the menu tree associated with the first electronic device 100, mapping the menu tree associated with the first electronic device 100 with one or more menu trees associated with the one or more second electronic devices 200a-200n, identifying the content in the one or more second electronic devices 200a-200n using the one or more menu trees associated with the one or more second electronic devices 200a-200n, and selecting the content in the one or more second electronic devices 200a-200n based on the pre-determined criterion.

After selecting the content in the one or more second electronic devices 200a-200n, the first electronic device 100 prioritizes/ranks the one or more second electronic devices 200a-200n based on the pre-determined criterion. Based on rank, the first electronic device 100 retrieves the content from the one or more second electronic devices 200a-200n.

In a claimed example, if the first electronic device 100 identifies the content on the one or more second electronic devices 200a-220n and the first electronic device 100 identifies a content having higher quality in the second electronic devices 200a among the other electronic devices 200b-200n, then the first electronic device 100 retrieves the content in the second electronic devices 200a.

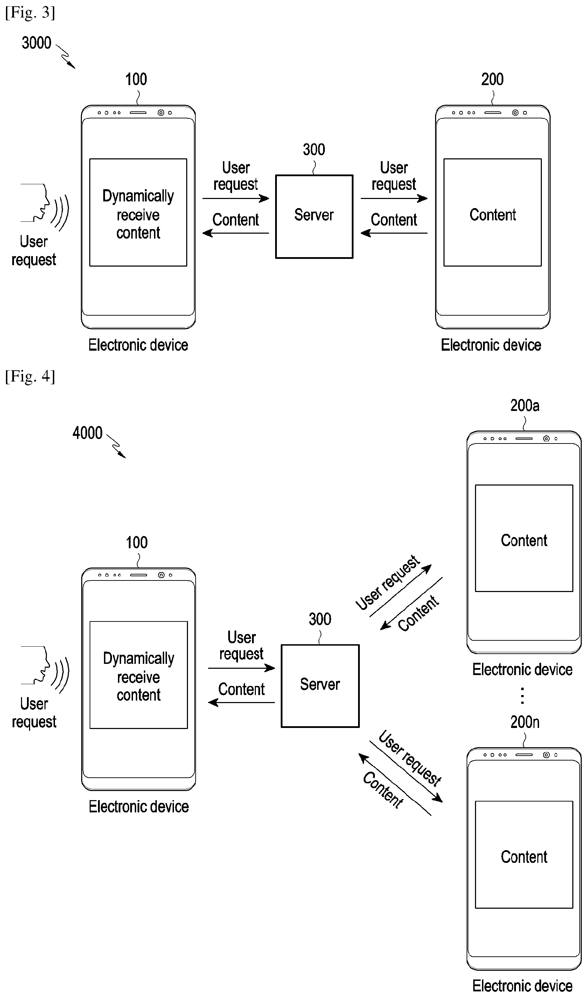

FIG. 3 illustrates an example system 3000 in which the first electronic device 100 retrieves the content from the second electronic device 200 through a server 300, according to an embodiment of the disclosure. In an embodiment, the system 3000 includes the first electronic device 100, the second electronic device 200 and the server 300. The operations and the functions of the first electronic device 100 and the second electronic device 200a are explained in conjunction with the FIG. 1.

The first electronic device 100 communicates with the second electronic device 200 through one or more communication protocols for retrieving the content. In an example, the first electronic device 100 and the second electronic device 200 may be connected to each other over an Internet network or a mobile communication network.

In an embodiment, the first electronic device 100 is configured to receive the user request. After receiving the user request, first electronic device 100 is configured to analyze the user request to determine the user intent and the context related to the user request. Further, first electronic device 100 is configured to transmit the user request including the user intent and the context related to the user request to the server 300. Further, the first electronic device 100 is configured to dynamically retrieve the content relevant to the user request on the second electronic device 200 from the server 300.

In an embodiment, the first electronic device 100 transmits, to the server 300, the menu tree associated with the first electronic device 100 for retrieving the content relevant to the user request on the second electronic device 200 from the server 300. Further, the first electronic device 100 frequently updates the menu tree to the server 300 for retrieving the content from the second electronic device 200.

The server 300 is configured to receive the user request from the first electronic device 100. After receiving the user request from the first electronic device 100, the server 300 is configured to identify the second electronic device 200 for processing the user request. Further, the server 300 is configured to identify the content relevant to the user request in the second electronic device 200 using one or more menu trees associated with the second electronic device 200.

In an embodiment, the second electronic device is identified for processing the user request by determining a network hub associated with the second electronic device 200, identifying the second electronic device 200 connected to the determined the network hubs, and evaluating whether the identified second electronic device 200 contain the content relevant to the user request. Wherein the network hub refers to peers to the second electronic device 200 where the relevant information is available.

Further, the server 300 is configured to dynamically retrieve the content from the second electronic device 200. After retrieving the content from the second electronic device 200, the server 300 is configured to provide or display the content to the first electronic device 100.

In an embodiment, the content is dynamically retrieved from the second electronic device 200 by obtaining the menu tree associated with the first electronic device 100, mapping the menu tree associated with the first electronic device 100 with the menu tree associated with the second electronic device 200, searching for the content in the second electronic device 200 using the menu tree associated with the second electronic device 200, and selecting the content determined on the second electronic device 200 based on the pre-determined criterion.

In an embodiment, the content is dynamically retrieved from the second electronic device 200 by searching for the content in the identified second electronic device 200 and selecting the content determined on the second electronic device 200 based on the selection criterion.

In an embodiment, the menu tree is updated continuously at the server 300 based on one or more functions of the second electronic device 200. The server 300 continuously monitors at least one of state information, context information and network topology of the first electronic device 100 and the second electronic device 200. Functions of the second electronic device 200 are explained in paragraphs pertaining to FIGS. 1, 2 and 3.

Further, the server 300 generates one or more notifications for the first electronic device 100 based one at least one of the device state information, context information and network topology of the second electronic device 200. Wherein the device state information refers to the state of battery of the first electronic device 100 or second electronic device 200. And the context information refers to the contextual parameters determined from the user request.

FIG. 4 illustrates an example system 4000 in which the first electronic device 100 retrieves the content from the one or more second electronic devices 200a-220n, through the server 300, by processing the user request on the server 300, according to an embodiment. In an embodiment, the system 4000 includes the first electronic device 100, the one or more second electronic devices 200a-220n and the server 300. The operations and the functions of the first electronic device 100, the one or more second electronic devices 200a-200n and the server are explained in conjunction with FIGS. 1 to 3.

The first electronic device 100 communicates with the one or more second electronic devices 200a-220n through one or more communication protocols for retrieving the content. In an example, the first electronic device 100 and the one or more second electronic devices 200a-220n may be connected to each other over the Internet or a mobile communication network.

In another embodiment, the server 300 is configured to dynamically retrieve the content from the one or more second electronic device 200a-220n. After retrieving the content from the one or more second electronic device 200a-220n, the server 300 is configured to provide the content to the first electronic device 100.

In an embodiment, one or more second electronic devices 200a-220n are identified for processing the user request by determining one or more network hubs associated with the one or more second electronic devices 200a-220n, identifying one or more second electronic devices 200a-220n connected to the determined one or more network hubs, and evaluating whether the identified one or more second electronic devices 200a-200n contain the content relevant to the user request.

In an embodiment, the server 300 is configured to determine one or more network hubs associated with the one or more second electronic devices 200-220n when the content related to the user request is unavailable at the one of the second electronic device 200a among the one or more second electronic devices 200b-220n.

In an embodiment, the content is dynamically retrieved from the one or more second electronic devices 200a-200n by obtaining the menu tree associated with the first electronic device 100, mapping the menu tree associated with the first electronic device 100 with one or more menu trees associated with the one or more second electronic devices 200a-200n, searching for the content in the one or more second electronic devices 200a-220n using the one or more menu trees associated with the one or more second electronic devices 200a-200n, and selecting the content determined on the one or more second electronic devices 200a-200n based on pre-determined criterion.

In an embodiment, the menu tree is updated continuously at the server 300 based on one or more functions of the one or more second electronic devices 200a-200n. Further, the server 300 continuously monitors at least one of state information, context information and network topology of the first electronic device 100 and the one or more second electronic devices 200a-200n.

Although the FIGS. 1 to 4 show various hardware components of the systems 1000-4000, other embodiments are not limited thereon. The systems 1000-4000 may include fewer components that those illustrated or additional components other than those illustrated. Further, the labels or names of the components are used only for illustrative purpose and do not limit the scope of the disclosure. One or more components can be combined together to perform same or substantially similar function to retrieve the content.

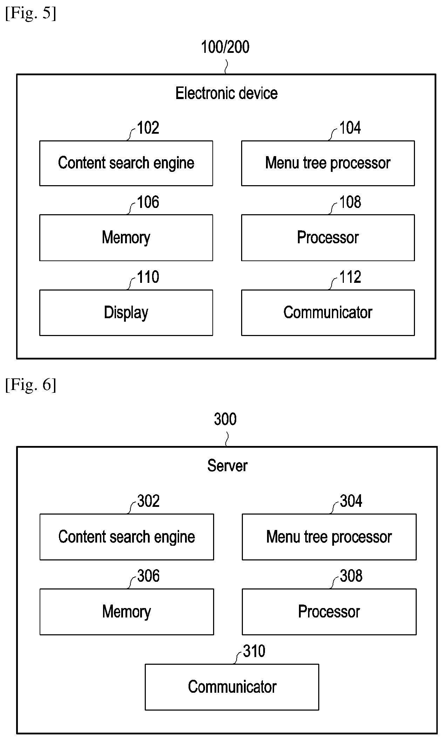

FIG. 5 is a block diagram of the first electronic device 100 and the second electronic device 200, according to an embodiment. In an embodiment, the first electronic device 100 and the second electronic device 200 include a content search engine 102, a menu tree processor 104, a memory 106, a processor 108, a display 110 and a communicator 112.

The content search engine 102 is configured to receive the user request. After receiving the user request, the content search engine 102 is configured to analyze the user request to determine the user intent and the context related to the user request. Further, the content search engine 102 is configured to execute the user request on the second electronic device 200 for retrieving the content.

In another embodiment, the content search engine 102 is configured to receive the user request. After receiving the user request, the content search engine 102 is configured to analyze the user request to determine the user intent and the context related to the user request.

Based on the user intent and the context, the content search engine 102 is configured to identify the second electronic device 200 in proximity to the first electronic device 100 for searching the content.

In an embodiment, the second electronic device 200 is identified for searching the content based on the user intent and the context by determining that the content relevant to the user request is unavailable or partially available at the first electronic device 100 and identifying the second electronic device 200 to search for the content in response to determining that the content relevant to the user request is unavailable or partially available at the first electronic device 100.

Further, the content search engine 102 is configured to dynamically retrieve the content relevant to the user request from the second electronic device 200. The content is dynamically retrieved, using the menu tree processor 104, from the second electronic device 200 by obtaining the menu tree associated with the first electronic device 100, mapping the menu tree associated with the first electronic device 100 with one or more menu trees associated with the second electronic device 200, identifying the content in the second electronic device 200 using the one or more menu trees associated with the second electronic device 200, and selecting the content in the second electronic device 200 based on the pre-determined criterion.

In another embodiment, after selecting the content from the one or more second electronic device 200, the content search engine 102 and the menu tree processor 104 prioritizes or ranks the second electronic device 200 based on pre-determined criterion. Based on the rank, the content search engine 102 retrieves the content from the second electronic device 200. Further, the content search engine 102 displays the content on the display 110.

In an embodiment, the content search engine 102 is configured to receive the user request. After receiving the user request, the content search engine 102 is configured to analyze the user request to determine the user intent and the context related to the user request. Further, the content search engine 102 is configured to transmit the user request including the user intent and the context related to the user request to the server 300.

In an embodiment, the menu tree processor 104 transmits the menu tree associated with the first electronic device 100 for retrieving the content relevant to the user request on the second electronic device 200 from the server 300. Further, the menu tree processor 104 frequently updates the menu tree to the server 300 for retrieving the content from the second electronic device 200.

Further, the processor 108 is configured to execute instructions stored in the memory 106 and to perform various processes. The communicator 112 is configured to provide communication between internal hardware components and between the electronic device and external devices via one or more networks. The communicator 112 is configured for communicating with the content search engine 102 and the menu tree processor 104 to retrieve the content.

In an embodiment, the communicator 112 typically includes one or more modules that perform communications such as wireless communications among the electronic devices 100 and 200 and the server 300. Further, the communicator 112 typically includes one or more modules which connect the electronic devices 100 and 200 to one or more networks.

The memory 106 also stores instructions to be executed by the processor 108. The memory 106 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory 106 may, in some examples, be considered a non-transitory storage medium. The term "non-transitory" may indicate that the storage medium is not embodied in a carrier wave or a propagated signal. However, the term "non-transitory" should not be interpreted that the memory 106 is non-movable. In some examples, the memory 106 can be configured to store larger amounts of information than the memory. In certain examples, a non-transitory storage medium may store data that can, over time, change (e.g., in Random Access Memory (RAM) or cache).

Although the FIG. 5 shows various hardware components of the first electronic device 100 and the second electronic device 200, other embodiments are not limited thereon. In other embodiments, the first electronic device 100 and the second electronic device 200 may include fewer components that those illustrated or additional components beyond those illustrated. Further, the labels or names of the components are used only for illustrative purpose and do not limit the scope of the disclosure. One or more components can be combined together to perform same or substantially similar function to retrieve the content.

FIG. 6 is a block diagram of the server 300, according to an embodiment as disclosed herein. In an embodiment, the server 300 includes a content search engine 302, a menu tree processor 304, a memory 306, a processor 308, and a communicator 310.

The content search engine 302 is configured to receive the user request from the first electronic device 100. After receiving the user request from the first electronic device 100, the content search engine 302 is configured to identify the second electronic device 200 for processing the user request. Further, the content search engine 302 is configured to identify the content relevant to the user request in the second electronic device 200 using one or more menu trees associated with the second electronic device 200 using the menu tree processor 304.

In an embodiment, the second electronic device 200 is identified, using the menu tree processor 304, for processing the user request by determining the network hub associated with the second electronic device 200, identifying the second electronic device 200 connected to the determined the network hubs, and evaluating whether the identified second electronic device 200 contains content relevant to the user request.

Further, the menu tree processor 304 is configured to dynamically retrieve the content from the second electronic device 200. After retrieving the content from the second electronic device 200, the content search engine 302 and the menu tree processor 304 are configured to provide the content to the first electronic device 100.

In an embodiment, the content is dynamically retrieved from the second electronic device 200, using the menu tree processor 304, by obtaining the menu tree associated with the first electronic device 100, mapping the menu tree associated with the first electronic device 100 with the menu tree associated with the second electronic device 200, searching for the content in the second electronic device 200 using the menu tree associated with the second electronic device 200, and selecting the content determined on the second electronic device 200 based on pre-determined criterion.

In an embodiment, the content is dynamically retrieved, using the menu tree processor 304, from the second electronic device 200 by searching for the content in the identified second electronic device 200 and selecting the content determined on the second electronic device 200 based on the selection criterion.

Further, the processor 308 is configured to execute instructions stored in the memory 306 and to perform various processes. The communicator 310 is configured for communication internally between internal hardware components and between the server and external devices via one or more networks. The communicator 310 is configured for communicating with the content search engine 302 and the menu tree processor 304 to retrieve the content.

The memory 306 stores instructions to be executed by the processor 308. The memory 306 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory 130 may, in some examples, be considered a non-transitory storage medium. The term "non-transitory" may indicate that the storage medium is not embodied in a carrier wave or a propagated signal. However, the term "non-transitory" should not be interpreted that the memory 306 is non-movable. In some examples, the memory 306 can be configured to store larger amounts of information than the memory. In certain examples, a non-transitory storage medium may store data that can, over time, change (e.g., in Random Access Memory (RAM) or cache).

FIG. 6 shows various hardware components of the server 300, but other embodiments are not limited thereon. In other embodiments, the server 300 may include fewer components that those illustrated or additional components beyond those illustrated. Further, the labels or names of the components are used only for illustrative purpose and do not limit the scope of the disclosure. One or more components can be combined together to perform same or substantially similar function to retrieve the content.

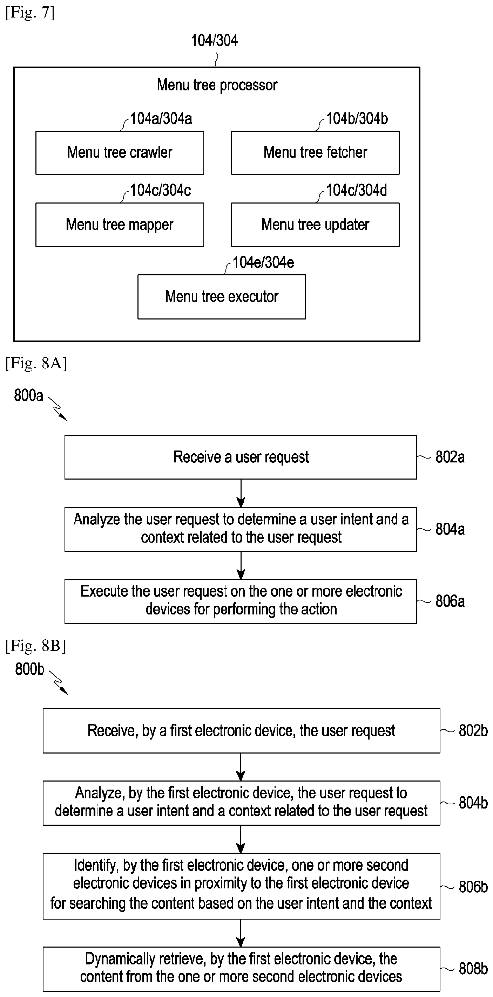

FIG. 7 is a block diagram of the menu tree processor 104/304, according to an embodiment. The menu tree processor 104/304 includes a menu tree crawler 104a/304a, a menu tree fetcher 104b/304b, a menu tree mapper 104c/304c, a menu tree updater 104d/304d and a menu tree executor 104e/304e.

The menu tree crawler 104a/304a obtains metadata information from the first electronic devices 100 and the second electronic devices 200. The menu tree fetcher 104b/304b is configured to obtain the menu tree associated with the first electronic devices 100 and the second electronic devices 200. After obtaining the menu tree associated with the first electronic devices 100 and the second electronic devices 200, the menu tree mapper 104c/304c is configured to map the traversal operation of the menu tree by comparing the menu tree associated with the first electronic devices 100 and the menu tree associated with the second electronic devices 200. The traversal operations refer to the process of visiting (checking and/or updating) each menu item in a menu tree data structure, exactly once.

After mapping the traversal operation of the menu tree by comparing the menu tree associated with the first electronic device 100 and the menu tree associated with the second electronic devices 200, the menu tree executor 104e/304e prepares the execution operation to be executed in the second electronic devices 200. The execution operation refers to executing instructions stored on memory of the first electronic device 100 and the second electronic device 200.

The menu tree updater 104d/304d is configured to update the menu tree to the server 300 for retrieving the content from one or more second electronic devices 100. The menu tree is updated continuously, periodically, or by request at the server 300 based on one or more functions of the one or more second electronic devices 300.

Although the FIG. 7 shows various hardware components of the menu tree processor 104/304, other embodiments are not limited thereon. In other embodiments, the menu tree processor 104/304 may include fewer components that those illustrated or additional components beyond those illustrated. Further, the labels or names of the components are used only for illustrative purpose and do not limit the scope of the disclosure. One or more components can be combined together to perform same or substantially similar function in the menu tree processor 104/304.

FIG. 8A is a flowchart illustrating a method 800a for executing the user request on the second electronic devices 200 for receiving the action, according to an embodiment of the disclosure. Steps 802a-806a are performed by the content search engine 102.

At 802a, the method includes receiving the user request. At 804a, the method includes analyzing the user request to determine the user intent and the context related to the user request. At 806a, the method includes executing the user request on the one or more electronic devices 106 for performing the action (e.g., receiving the content or the like).

The various actions, acts, blocks, steps, or the like in the flowchart 800a may be performed in the order presented, in a different order or simultaneously. Further, in some embodiments, some of the actions, acts, blocks, steps, or the like may be omitted, added, modified, skipped, or the like without departing from the scope of the disclosure.

FIG. 8B is a flowchart illustrating a method 800b for retrieving content by processing the user request on the second electronic device 200, according to an embodiment of the disclosure. Steps 802b-808b are performed by the content search engine 102.

At 802b, the method includes receiving the user request. At 804b, the method includes analyzing the user request to determine the user intent and the context related to the user request. At 806b, the method includes identifying one or more second electronic devices 200 in proximity to the first electronic device 100 for searching the content based on the user intent and the context. At 808b, the method includes dynamically retrieving the content relevant to the user request from the one or more second electronic devices 200.

The various actions, acts, blocks, steps, or the like in the flowchart 800b may be performed in the order presented, in a different order or simultaneously. Further, in some embodiments, some of the actions, acts, blocks, steps, or the like may be omitted, added, modified, skipped, or the like without departing from the scope of the disclosure.

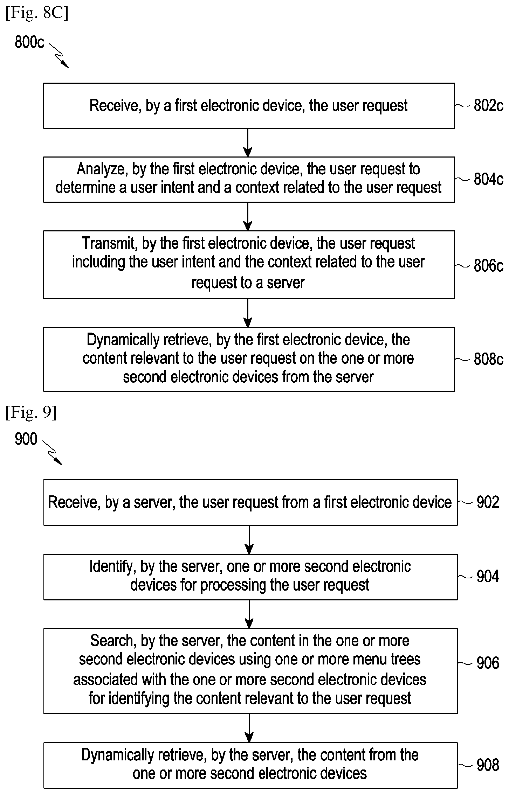

FIG. 8C is a flowchart illustrating a method 800c for retrieving content from the set of second electronic devices 200, through the server 300, by processing the user request on the second electronic device 200, according to an embodiment of the disclosure. Steps 802c-808c are performed by the content search engine 102.

At 802c, the method includes receiving the user request. At 804c, the method includes analyzing the user request to determine the user intent and the context related to the user request. At 806c, the method includes transmitting the user request including the user intent and the context related to the user request to the server 300. At 808c, the method includes dynamically retrieving the content relevant to the user request on the one or more second electronic devices 200 from the server 100.

The various actions, acts, blocks, steps, or the like in the flowchart 800c may be performed in the order presented, in a different order or simultaneously. Further, in some embodiments, some of the actions, acts, blocks, steps, or the like may be omitted, added, modified, skipped, or the like without departing from the scope of the disclosure.

FIG. 9 is a flowchart illustrating a method 900 for retrieving content from the set of second electronic devices 200, through the server 300, by processing the user request on the server 300, according to an embodiment of the disclosure. Steps 902-908 are performed by the menu tree processor 304.

At 902, the method includes receiving the user request from the first electronic device 100. At 904, the method includes identifying one or more second electronic devices 200 for processing the user request. At 906, the method includes identifying the content relevant to the user request in the one or more second electronic devices 200 using one or more menu trees associated with the one or more second electronic devices 200. At 908, the method includes dynamically retrieving the content from the one or more second electronic devices 200.

The various actions, acts, blocks, steps, or the like in the flowchart 900 may be performed in the order presented, in a different order or simultaneously. Further, in some embodiments, some of the actions, acts, blocks, steps, or the like may be omitted, added, modified, skipped, or the like without departing from the scope of the disclosure.

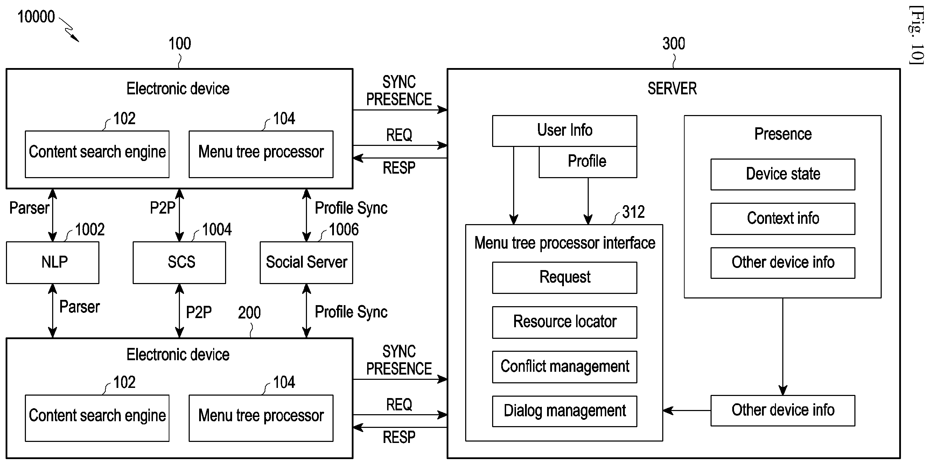

FIG. 10 illustrates a system 10000 for retrieving content from the second electronic device 200 by processing the user request on the second electronic device 200 through the server 300, according to an embodiment of the disclosure.

In an embodiment, the system 10000 includes the first electronic device 100, the second electronic device 200 and the server 300. The operations and the functions of the first electronic device 100, the one or more second electronic devices 200a-200n and the server are explained in conjunction with the FIGS. 1 to 7. The first electronic device 100 retrieves the content from the second electronic device 200 by processing the user request on the second electronic device 200 through the server 300 using the NLP 1002, a SCS 1004, and a social server 1006. Wherein the NLP refers to natural language processor and the SCS refers to social community server. These help in parsing the user request to determine user context.

Menu tree processor interface 312 supports the dialog management between the first electronic device 100 and the second electronic devices 200. Further, the menu tree processor interface 312 supports the conflict management between the first electronic device 100 and the second electronic devices 200

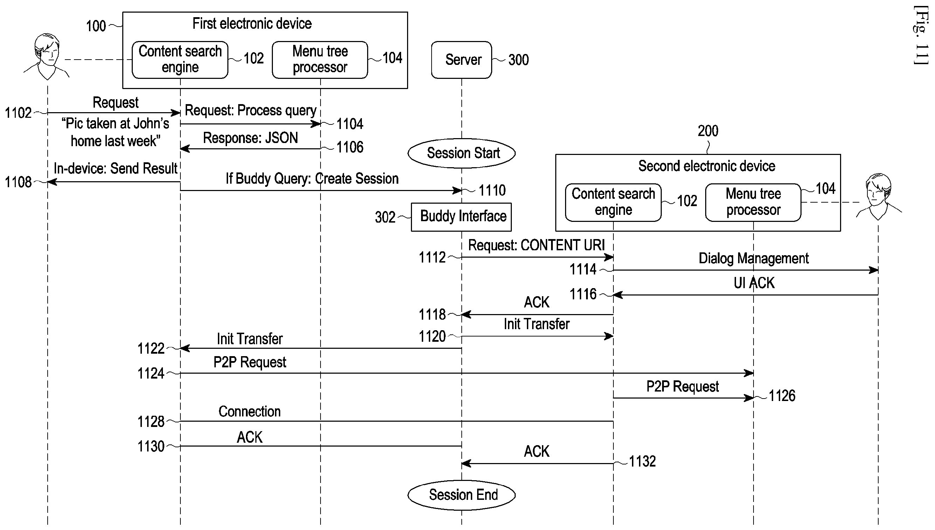

FIG. 11 is a sequence diagram illustrating various operations for establishing a connection between the first electronic device 100 and the second electronic device 200 through the server 300, according to an embodiment of the disclosure.

At 1102, the first electronic device 100 receives the user request from the user. The user request is processed on the content search engine 102 with the first electronic device 100. At 1104, the content search engine 102 associated with the first electronic device 100 sends the process query to the menu tree processor 104. At 1106, the menu tree processor 104 provides a response in the form of JSON to the content search engine 102 associated with the first electronic device 100 based on the process query. At 1108, the electronic device 100 obtains the result based on the response.

If the relevant result is unavailable in the first electronic device 100, at 1110, the content search engine 102 associated with the first electronic device 100 creates a session with the server 300. After initiating the session, at 1112, the server 300 sends the request including the CONTENT URI to the second electronic device 200.

At 1114, a dialog management is managed between the second electronic device 200 and the user. At 1116, the UI ACK is managed between the second electronic device 200 and the user. At 1118, an acknowledgement is provided between the second electronic device 200 and the server 300. At 1120, the server 300 sends the initiation transfer request to the content search engine 102 associated with the second electronic device 200. At 1122, the server 300 sends the initiation transfer request to the content search engine 102 associated with the first electronic device 100.

At 1124, the content search engine 102 associated with the first electronic device 100 sends a P2P request to the menu tree processor 104 associated with the second electronic device 200. At 1126, the content search engine 102 associated with the second electronic device 200 sends a P2P request to the menu tree processor 104 associated with the second electronic device 200. Based on the P2P request, connection establishment (e.g., privacy/Security data transfer or the like) is established between the content search engine 102 associated with the first electronic device 100 and the content search engine 102 associated with the second electronic device 200. After establishing the connection, at 1130, the content search engine 102 associated with the first electronic device 100 sends the ACK message to the server 300. At 1132, the content search engine 102 associated with the second electronic device 200 sends the ACK message to the server 300.

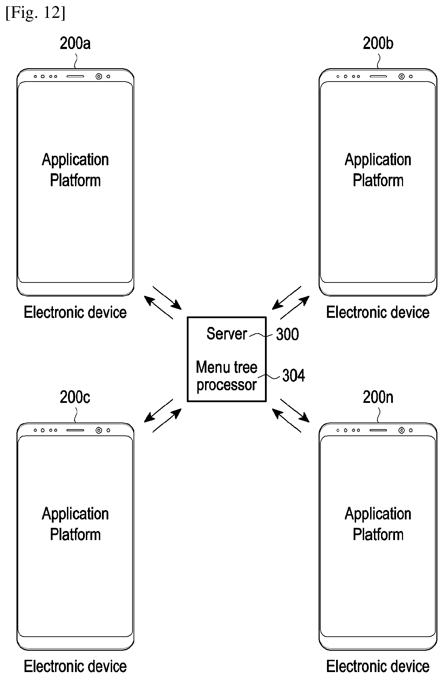

FIG. 12 is an example scenario in which various operations of the menu tree processor 304 are explained, according to an embodiment of the disclosure. The operations and the functions of the menu tree processor 304 are explained in conjunction with the FIG. 7. Further, the menu tree is updated continuously at the server 300 based on one or more functions of the one or more second electronic devices 200 and the first electronic device 100. Further, whenever a new function or operation of the electronic devices 100, 200 is added or updated, the server 300 updates the menu tree across the electronic devices 100 and 200 irrespective of an application platform (e.g., Android platform, windows platform or the like). The server 300 continuously monitors at least one of state information, context information and network topology of the first electronic device 100 and the one or more second electronic devices 200. The server 300 generates one or more notifications for the first electronic device 100 based one at least one of the device state information, context information and network topology of the one or more second electronic devices 200.

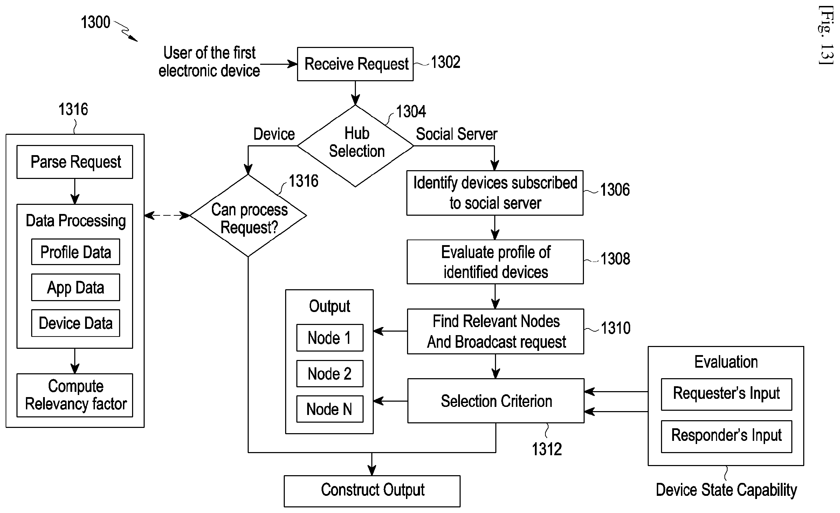

FIG. 13 is an example flowchart 1300 illustrating various operations for retrieving content from the second electronic device 200, through the server 300, by processing the user request on the server 300, according to an embodiment of the disclosure.

The first electronic device 100 receives the user request at 1302. Based on the request, the first electronic device 100 analyzes the request within the first electronic device 100 or determines the network hub associated with the one or more second electronic devices when the content related to the user request is unavailable at the first electronic device 100 at 1304.

If the content related to the user request is unavailable at the first electronic device 100 then, the first electronic device 100 sends the user request to the second electronic device 200 through the server 300.

In order to send the user request to the second electronic device 200 through the server 300, the server 300 identifies the second electronic devices 200 subscribed to the core application server 1106 at 1306. The server 300 evaluates the profile of the identified second electronic devices 200 at 1308. The server 300 finds the relevant second electronic devices 200 and broadcasts the user request to the second electronic devices 200 at 1310. The server 300 determines the network hubs associated with the one or more second electronic devices 200 when the content related to the user request is available at the one or more second electronic devices 200. Further, the server 300 dynamically retrieves the content relevant to the user request based on the relevancy factor and the selection criterion at 1312.

If the first electronic device 100 analyzes the request within the first electronic device 100 then, at 1316, the first electronic device 100 analyzes the user request to determine the user intent and the context related to the user request by using the profile data, the application data, information, and device data and information. Further, the first electronic device 100 dynamically retrieves the content relevant to the user request based on the relevancy factor. The relevancy factor is determined by a ranking logic.

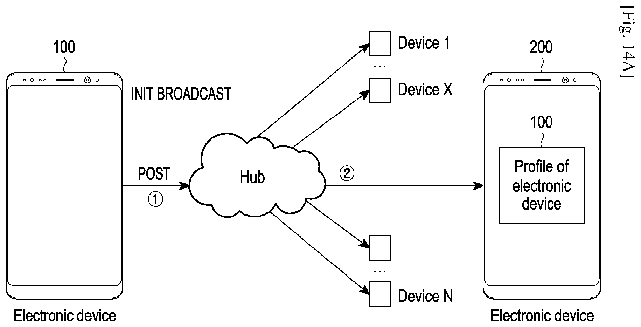

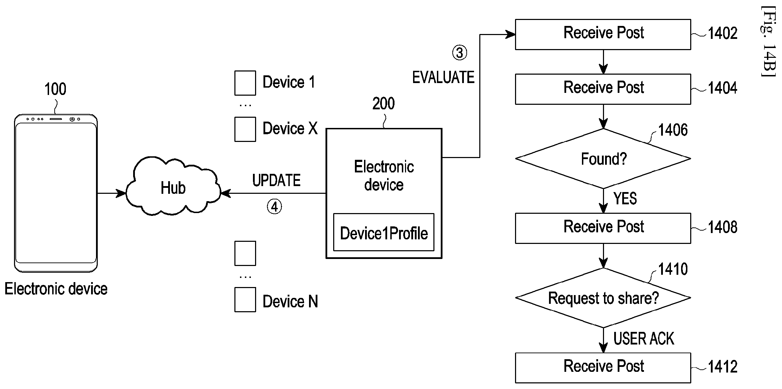

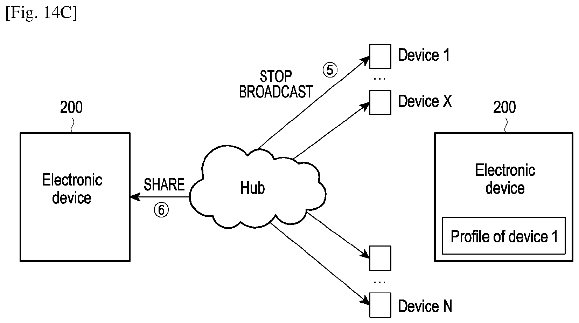

FIG. 14A to 14C are example scenarios in which various operations are performed for retrieving content from the second electronic devices 200 through the server 300 during single hop scenario, according to an embodiment of the disclosure.

At 1, the post request is transmitted by the device. The device indicates the node that can be the server, the first electronic device 100, application or the like. At 2, the device identifies the second electronic devices 200 subscribed to the core application server 1006. At 3, the device broadcasts request to the identified second electronic devices 200. At 4, the hub evaluates in individual electronic devices 200 if the request can be addressed. The hub responds the server 300 with the identified data. At 5, the hub broadcasts the subscribed second electronic devices 200 to stop an evaluation process. At 6, the hub shares the identified data to the first electronic device 100

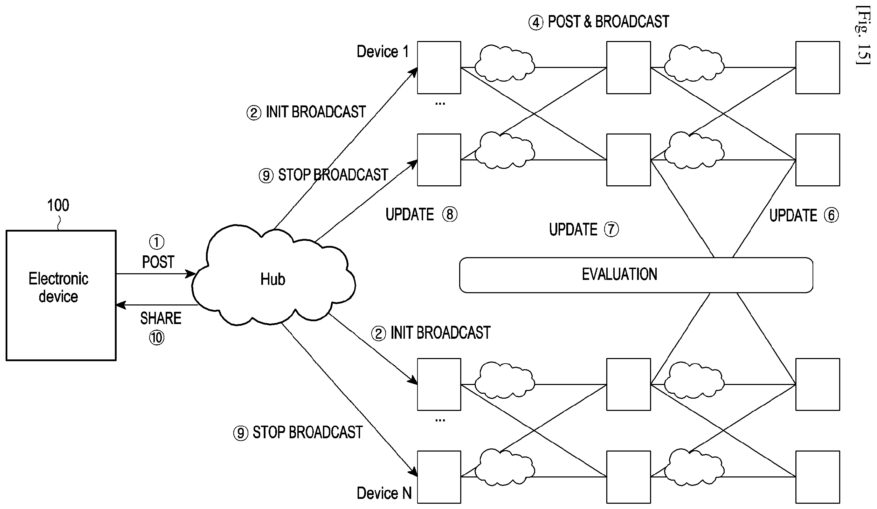

FIG. 15 is another example scenario describing the manner of retrieving content from the second electronic device through the server. In other word, FIG. 15 is an example scenario in which various operations is performed for retrieving content from the second electronic devices 200, through the server 300, by processing the user request on the server 300 during a multi hop scenario, according to an embodiment of the disclosure. The user request is broadcasted iteratively via a core app subscription service and the server 300 and the electronic devices 100 and 200 are updated once identifying data in multi hop scenario.

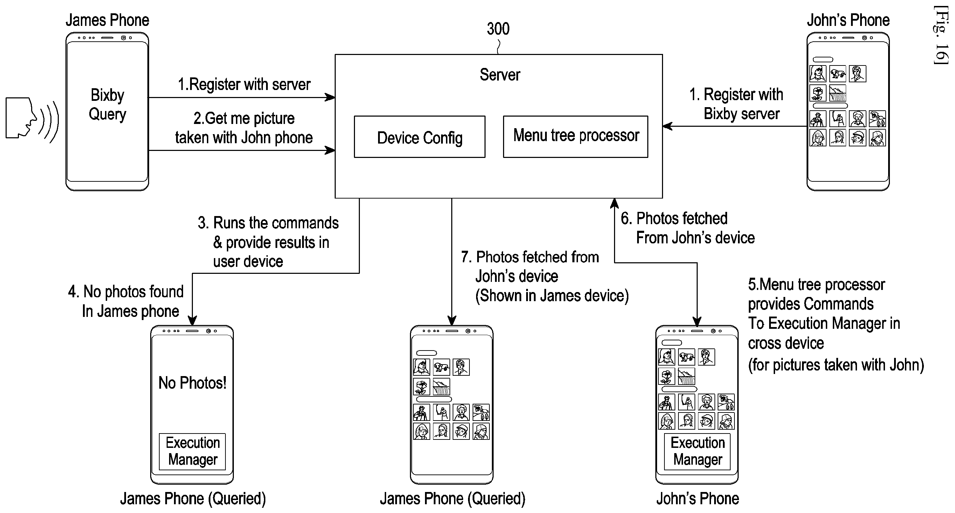

FIG. 16 is a sequence diagram illustrating various operations for retrieving content from the second electronic devices 200 by processing the user request on the first electronic device 100 through the server 300, according to an embodiment of the disclosure.

At 1, the first electronic device 100 registers with the server 300 and the second electronic device 200 registers with the server 300. At 2, the first electronic device 100 receives query, for example "I want to see the picture taken at John's home last week," from the user. At 3, based on the query, the first electronic device 100 executes the user query and provides a result as no photos found at 4. Further, the second electronic device 200 receives the query from the first electronic device 100 and executes the user query using the menu tree processor 104 at 5. Based on the query, the second electronic device 200 sends the result to the first electronic device 100 at 6 and 7. Further, the first electronic device 100 displays the result received from the second electronic device 200.

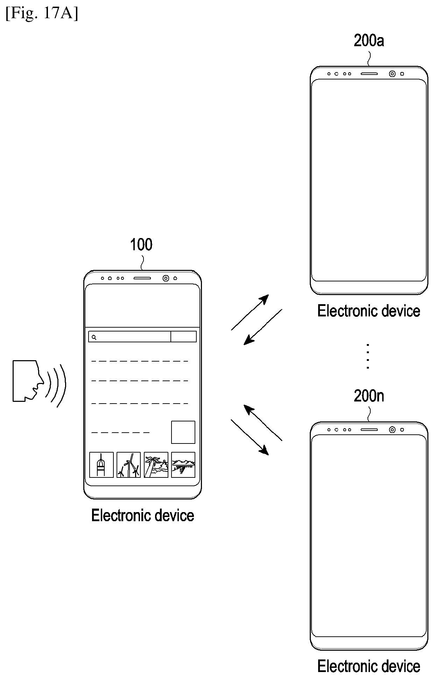

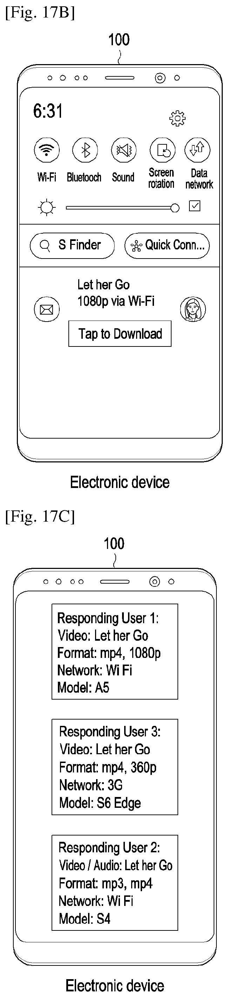

FIGS. 17A-C, 18A-C, and 19 are example scenarios in which various operations is performed for retrieving content from the second electronic devices 200 by processing the user request on the first electronic device 100 through the server 300, according to an embodiment of the disclosure.

As shown in FIGS. 17A-C, in an example, first electronic device 100 receives the query as "Let her Go" song. Based on the user query, the first electronic device 100 identifies that context-based indication corresponding to the "Let her Go" song and search the query within the first electronic device 100. Further, the first electronic device 100 identifies one or more electronic devices having the "Let her Go" song from among one or more electronic devices 200a-200n. Based on the identification related to the context-based indication, the first electronic device 100 processes the query in the one or more second electronic devices. Further, the first electronic device 100 retrieves the "Let her Go" song from the one or more second electronic devices. Further, the first electronic device 100 provides the "Let her Go" song. The notification received with details in the first electronic device 100 taps to start downloading the song from the one or more second electronic devices.

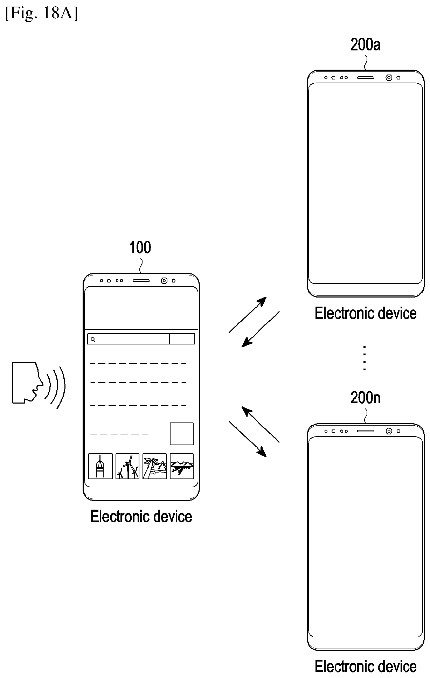

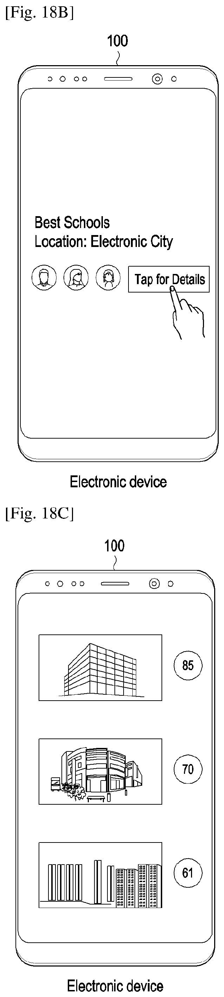

As shown in the FIGS. 18A-C, in an example, the user of the first electronic device 100 feeds the query as "find schools near me." Based on the user query, the first electronic device 100 identifies that context-based indication corresponding to the "find schools near me" and searches the query within the first electronic device 100. Further, the first electronic device 100 identifies one or more electronic devices having the school information from among one or more electronic devices 200a-200n. Based on the identification related to the context-based indication, the first electronic device 100 processes the query in the one or more second electronic devices. Further, the first electronic device 100 retrieves the school information from the one or more second electronic devices. Further, the first electronic device displays the school information.

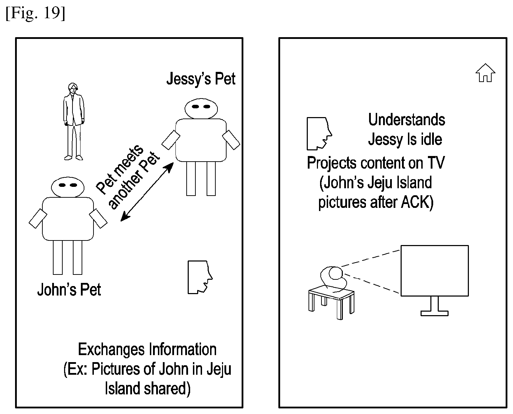

As shown in the FIG. 19, the information (e.g., pictures of John in Jeju Island shared or the like) is shared with second user. Based on the shared information, the second user pet projects content on the TV (John's Jeju Island pictures after ACK).

The embodiments disclosed herein can be implemented through at least one software program running on at least one hardware device and performing network management functions to control the elements.

The foregoing description of the specific embodiments will so fully reveal the general nature of the embodiments herein that others can, by applying current knowledge, readily modify and or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the embodiments as described herein.

## Claims

1. A method for retrieving content by a first device (100), the method comprising:
identifying a user's request;
determining that content relevant to the user's request is unavailable or partially available at the first device (100);
identifying two or more second devices (200a, 200b) in proximity to the first device for searching the content in response to determining that the content is unavailable or partially available at the first device (100);
obtaining a menu tree associated with the first device (100);
mapping the menu tree associated with the first device (100) with one or more menu trees associated with the two or more second devices (200a, 200b);
identifying the content in each of the two or more second devices (200a, 200b) using the one or more menu trees associated with the two or more second devices (200a, 200b);
selecting the content in the two or more second electronic devices (200a, 200b) based on a content quality criterion,
ranking the two or more second electronic devices (200a, 200b) based on the content quality criterion, and
retrieving the content, based on the ranking, from a second device (200a, 200b) in which the content has the highest quality.

2. The method of claim 1, wherein the user's request comprises at least one of a text input, a voice input, a gesture input and a camera input; and
wherein the first device (100) is configured to communicate with the two or more second devices (200a, 200b) in at least one of proximity and over an internet protocol, IP, through one or more communication protocols for retrieving the content.

3. The method of claim 1, further comprising:
transmitting the user's request including a user's intent and a context related to the user's request to a server (300);
transmitting a menu tree associated with the first device (100) for retrieving the content relevant to the user's request on the two or more second devices (200a, 200b) from the server (300); and
receiving the content relevant to the user's request on the two or more second devices (200a, 200b) from the server (300).

4. The method of claim 3, wherein the first device (100) frequently updates the menu tree to the server (300) for retrieving the content from two or more second devices (200a, 200b).

5. A first device (100) for retrieving content, comprising:
a memory (106); and
a processor (108) coupled to the memory, configured to:
identify a user's request;
determine that content relevant to the user's request is unavailable or partially available at the first device (100);
identify two or more second devices (200a, 200b) in proximity to the first device based on the user's request for searching the content in response to determining that the content is unavailable or partially available at the first device (100);
obtain a menu tree associated with the first device (100);
map the menu tree associated with the first device (100) with one or more menu trees associated with the two or more second devices (200a, 200b);
identify the content in each of the two or more second devices (200a, 200b) using the one or more menu trees associated with the two or more second devices (200a, 200b);
select the content in the two or more second electronic devices (200a, 200b) based on a content quality criterion,
rank the two or more second electronic devices (200a, 200b) based on the content quality criterion, and
retrieve the content from a second device (200a, 200b) in which the content having the highest quality, among the two or more second devices (200a, 200b).

## Patentansprüche

1. Verfahren zum Abrufen von Inhalt durch eine erste Vorrichtung (100), wobei das Verfahren umfasst:
Identifizieren einer Anforderung eines Benutzers;
Bestimmen, dass der für die Anforderung des Benutzers relevante Inhalt an der ersten Vorrichtung (100) nicht verfügbar oder teilweise verfügbar ist;
Identifizieren von zwei oder mehr zweiten Vorrichtungen (200a, 200b) in der Nähe der ersten Vorrichtung zum Suchen des Inhalts als Reaktion auf das Bestimmen, dass der Inhalt an der ersten Vorrichtung (100) nicht verfügbar oder teilweise verfügbar ist;
Erhalten eines der ersten Vorrichtung (100) zugeordneten Menübaums;
Abbilden des der ersten Vorrichtung (100) zugeordneten Menübaums auf einen oder mehrere Menübäume, die den zwei oder mehreren zweiten Vorrichtungen (200a, 200b) zugeordnet sind;
Identifizieren des Inhalts in jeder der zwei oder mehr zweiten Vorrichtungen (200a, 200b) unter Verwendung des einen oder der mehreren Menübäume, die den zwei oder mehr zweiten Vorrichtungen (200a, 200b) zugeordnet sind;
Auswählen des Inhalts in den zwei oder mehr zweiten elektronischen Vorrichtungen (200a, 200b) basierend auf einem Inhaltsqualitätskriterium,
Einstufen der zwei oder mehr zweiten elektronischen Vorrichtungen (200a, 200b) basierend auf dem Inhaltsqualitätskriterium, und
Abrufen des Inhalts, basierend auf der Einstufung, von einer zweiten Vorrichtung (200a, 200b), in der der Inhalt die höchste Qualität aufweist.

2. Verfahren nach Anspruch 1, wobei die Anforderung des Benutzers mindestens eine einer Texteingabe, einer Spracheingabe, einer Gesteneingabe und einer Kameraeingabe umfasst; und
wobei die erste Vorrichtung (100) konfiguriert ist, um mit den zwei oder mehr zweiten Vorrichtungen (200a, 200b) in mindestens einem von Nähe und über ein Internetprotokoll, IP, durch ein oder mehrere Kommunikationsprotokolle zum Abrufen des Inhalts zu kommunizieren.

3. Verfahren nach Anspruch 1, ferner umfassend:
Übertragen der Anforderung des Benutzers, die eine Absicht des Benutzers und einen Kontext in Bezug auf die Anforderung des Benutzers enthält, an einen Server (300);
Übertragen eines der ersten Vorrichtung (100) zugeordneten Menübaums zum Abrufen des für die Anforderung des Benutzers relevanten Inhalts auf den zwei oder mehr zweiten Vorrichtungen (200a, 200b) vom Server (300); und
Empfangen des für die Anforderung des Benutzers relevanten Inhalts auf den zwei oder mehr zweiten Vorrichtungen (200a, 200b) vom Server (300).

4. Verfahren nach Anspruch 3, wobei die erste Vorrichtung (100) den Menübaum häufig für den Server (300) aktualisiert, um den Inhalt von zwei oder mehr zweiten Vorrichtungen (200a, 200b) abzurufen.

5. Erste Vorrichtung (100) zum Abrufen von Inhalt, umfassend:
einen Speicher (106); und
einen Prozessor (108) der mit dem Speicher gekoppelt ist und konfiguriert ist zum:
Identifizieren einer Anforderung eines Benutzers;
Bestimmen, dass der für die Anforderung des Benutzers relevante Inhalt an der ersten Vorrichtung (100) nicht verfügbar oder teilweise verfügbar ist;
Identifizieren von zwei oder mehr zweiten Vorrichtungen (200a, 200b) in der Nähe der ersten Vorrichtung basierend auf der Anforderung des Benutzers zum Suchen des Inhalts als Reaktion auf das Bestimmen, dass der Inhalt an der ersten Vorrichtung (100) nicht verfügbar oder teilweise verfügbar ist;
Erhalten eines der ersten Vorrichtung (100) zugeordneten Menübaums;
Abbilden des der ersten Vorrichtung (100) zugeordneten Menübaums auf einen oder mehrere Menübäume, die den zwei oder mehreren zweiten Vorrichtungen (200a, 200b) zugeordnet sind;
Identifizieren des Inhalts in jeder der zwei oder mehr zweiten Vorrichtungen (200a, 200b) unter Verwendung des einen oder der mehreren Menübäume, die den zwei oder mehr zweiten Vorrichtungen (200a, 200b) zugeordnet sind;
Auswählen des Inhalts in den zwei oder mehr zweiten elektronischen Vorrichtungen (200a, 200b) basierend auf einem Inhaltsqualitätskriterium,
Einstufen der zwei oder mehr zweiten elektronischen Vorrichtungen (200a, 200b) basierend auf dem Inhaltsqualitätskriterium, und
Abrufen des Inhalts von einer zweiten Vorrichtung (200a, 200b), in der der Inhalt die höchste Qualität aufweist, aus den zwei oder mehr zweiten Vorrichtungen (200a, 200b).

## Revendications

1. Procédé de récupération de contenu par un premier dispositif (100), le procédé comprenant :
identifier la demande d'un utilisateur ;
déterminer que le contenu pertinant pour la demande de l'utilisateur est indisponible ou partiellement disponible au niveau du premier dispositif (100) ;
identifier deux ou plusieurs deuxièmes dispositifs (200a, 200b) à proximité du premier dispositif pour rechercher le contenu en réponse à la détermination que le contenu est indisponible ou partiellement disponible au niveau du premier dispositif (100) ;
obtenir une arborescence de menus associée au premier dispositif (100) ;
mapper l'arborescence de menus associée au premier dispositif (100) avec une ou plusieurs arborescences de menus associées aux deux ou plusieurs deuxièmes dispositifs (200a, 200b) ;
identifier le contenu dans chacun des deux ou plusieurs deuxièmes dispositifs (200a, 200b) à l'aide de l'une ou plusieurs arborescences de menu associées aux deux ou plusieurs deuxièmes dispositifs (200a, 200b) ;
sélectionner le contenu dans les deux ou plusieurs deuxièmes dispositifs électroniques (200a, 200b) en se basant sur un critère de qualité de contenu,
classer les deux ou plusieurs deuxièmes dispositifs électroniques (200a, 200b) en se basant sur le critère de qualité de contenu, et
récupérer le contenu, en se basant sur le classement, à partir d'un deuxième dispositif (200a, 200b) dans lequel le contenu présente la meilleure qualité.

2. Procédé de la revendication 1, dans lequel la demande de l'utilisateur comprend au moins l'une d'une entrée de texte, d'une entrée de voix, d'une entrée de geste et d'une entrée de caméra ; et
dans lequel le premier dispositif (100) est configuré pour communiquer avec les deux ou plusieurs deuxièmes dispositifs (200a, 200b) dans au moins un de proximité et sur un protocole Internet, IP, par le biais d'un ou plusieurs protocoles de communication pour récupérer le contenu.

3. Procédé de la revendication 1, comprenant en outre :
transmettre la demande de l'utilisateur comprenant une intention de l'utilisateur et un contexte lié à la demande de l'utilisateur à un serveur (300) ;
transmettre une arborescence de menu associée au premier dispositif (100) pour récupérer le contenu correspondant à la demande de l'utilisateur sur les deux deuxièmes ou plusieurs dispositifs (200a, 200b), à partir du serveur (300) ; et
recevoir depuis le serveur (300) le contenu correspondant à la demande de l'utilisateur sur les deux ou plusieurs deuxièmes dispositifs (200a, 200b).

4. Procédé de la revendication 3, dans lequel le premier dispositif (100) met fréquemment à jour l'arborescence de menu vers le serveur (300) pour récupérer le contenu de deux ou plusieurs deuxièmes dispositifs (200a, 200b).

5. Premier dispositif (100) pour récupérer du contenu, comprenant :
une mémoire (106) ; et
un processeur (108) couplé à la mémoire configuré pour :
identifier la demande d'un utilisateur ;
déterminer que le contenu correspondant à la demande de l'utilisateur est indisponible ou partiellement disponible au niveau du premier dispositif (100) ;
identifier deux ou plusieurs deuxièmes dispositifs (200a, 200b) à proximité du premier dispositif en se basant sur la demande de l'utilisateur pour rechercher le contenu en réponse à la détermination que le contenu est indisponible ou partiellement disponible au niveau du premier dispositif (100) ;
obtenir une arborescence de menus associée au premier dispositif (100) ;
mapper l'arborescence de menus associée au premier dispositif (100) avec une ou plusieurs arborescences de menus associées aux deux ou plusieurs deuxièmes dispositifs (200a, 200b) ;
identifier le contenu dans chacun des deux ou plusieurs deuxièmes dispositifs (200a, 200b) à l'aide de l'une ou plusieurs arborescences de menu associées aux deux ou plusieurs deuxièmes dispositifs (200a, 200b) ;
sélectionner le contenu dans les deux ou plusieurs deuxièmes dispositifs électroniques (200a, 200b) en se basant sur un critère de qualité de contenu,
classer les deux ou plusieurs deuxièmes dispositifs électroniques (200a, 200b) en se basant sur le critère de qualité de contenu, et
récupérer le contenu à partir d'un deuxième dispositif (200a, 200b) dans lequel le contenu a la meilleure qualité, parmi les deux deuxièmes dispositifs ou plus (200a, 200b).
